# FASCICULE DE BREVET EUROPEEN

(11) **EP 4 014 579 B1**
(45) Date de publication et mention de la délivrance du brevet: **31.01.2024**
(21) Numéro de dépôt: 20775873.1
(22) Date de dépôt: 25.09.2020
(51) Int. Cl.: H04W 48/20, H04W 84/12

(54) **PROCEDE DE GESTION DE L'ASSOCIATION A UN RESEAU SANS FIL DE STATIONS SUPPORTANT DIFFERENTES VERSIONS INCREMENTALES D'UNE TECHNOLOGIE**
VERFAHREN ZUR VERWALTUNG DER ZUORDNUNG VON STATIONEN, DIE VERSCHIEDENE INKREMENTELLE VERSIONEN EINER TECHNOLOGIE FÜR EIN DRAHTLOSES NETZWERK UNTERSTÜTZEN
METHOD FOR MANAGING THE ASSOCIATION OF STATIONS SUPPORTING DIFFERENT INCREMENTAL VERSIONS OF A TECHNOLOGY TO A WIRELESS NETWORK

(30) Priorité: 30.09.2019 FR 1910821
(43) Date de publication de la demande: 22.06.2022
(73) Titulaire: SAGEMCOM BROADBAND SAS, 92500 Rueil-Malmaison (FR)
(72) Inventeur: LALAM, Massinissa, 92500 Rueil Malmaison (FR); PAYEN, Olivier, 92500 Rueil Malmaison (FR)
(74) Mandataire: Cabinet Le Guen Maillet
(86) Numéro de dépôt international: PCT/EP2020/076961
(87) Numéro de publication internationale: WO 2021/063838

(56) Documents cités:
- US-A1- 2012 230 305
- US-A1- 2018 310 240
- Anonymous: "Part 11: Wireless LAN Medium Access Control (MAC) and Physical Layer (PHY) Specifications - Excerpt: Association Request" In: "Part 11: Wireless LAN Medium Access Control (MAC) and Physical Layer (PHY) Specifications - Excerpt: Association Request", 29 mars 2012 (2012-03-29), IEEE, XP055486194, ISBN: 978-0-7381-7245-3 le document en entier

## Description

### DOMAINE TECHNIQUE

La présente invention concerne le domaine de la gestion de réseaux sans-fil et plus particulièrement la gestion de la connexion auxdits réseaux de stations supportant différentes versions incrémentales d'une technologie sans-fil.

### ETAT DE LA TECHNIQUE ANTERIEURE

Certains protocoles de communication tels que la technologie Wi-Fi présentent une nature incrémentale permettant à une version d'être compatible avec une autre version plus ancienne et/ou avec une version plus récente. Le développement de telles technologies incrémentales permet à des terminaux ou stations supportant une première version de se connecter à une passerelle supportant une autre version sans nécessiter de mise à jour. Ainsi, il est possible de faire évoluer la technologie en proposant de nouvelles fonctionnalités sans empêcher une station ne bénéficiant pas des nouvelles fonctionnalités de se connecter. Par exemple, une passerelle résidentielle Wi-Fi basée sur l'amendement IEEE 802.1 1ax (ou « Wi-Fi 6 »), et ne présentant qu'un réseau dédié à l'usage privé de l'abonné, met en place un réseau sans-fil qui supporte la version 802.11ax. De par la nature incrémentale de la technologie Wi-Fi, la passerelle résidentielle supporte également les versions précédentes telles que 802.11ac (« Wi-Fi 5 ») sur la bande 5 GHz, 802.11n (« Wi-Fi 4 ») sur la bande 2.4 et 5 GHz . Cependant, il peut survenir des problèmes d'interopérabilité avec des stations ne supportant que l'une des versions précédentes, par exemple pour des raisons liées à une implémentation particulière. En effet, des balises (« beacon » en anglais) conformes à l'amendement 802.11ax émises par la passerelle résidentielle doivent indiquer le support de la version courante 802.11ax ainsi que de toutes les versions précédentes supportées. Lesdites balises comportent alors de nombreuses données. Une station conçue pour ne traiter que des balises comprenant une quantité de données inférieure à celle des balises conformes à l'amendement 802.1 1ax ne peut alors pas se connecter au réseau émis par la passerelle résidentielle.

Afin de limiter les problèmes d'interopérabilité, il est possible de volontairement limiter la technologie supportée par le réseau, par exemple en choisissant d'émettre un réseau supportant uniquement la version 802.11ac sur la bande 5 GHz. Des stations supportant la version plus récente 802.11ax peuvent également s'y connecter. Cependant, de telles stations ne peuvent alors pas bénéficier des dernières fonctionnalités proposées.

Il est également possible de créer au sein de la même passerelle résidentielle et sur la même bande de fréquence un deuxième réseau volontairement limité à une technologie de version inférieure afin que les stations ne supportant que cette technologie puissent se connecter, par exemple en choisissant de créer un deuxième réseau supportant uniquement la version 802.11ac sur la bande 5 GHz en plus d'un premier réseau supportant la version 802.11ax. Cependant, rien n'empêche des stations 802.11ax de se connecter au deuxième réseau, les empêchant de fait de bénéficier des dernières fonctionnalités proposées.

La même problématique existe aussi dans le déploiement sur la bande des 5 GHz d'un premier réseau 5G NR-U (3GPP) et d'un deuxième réseau 4G LTE-U (MultiFire Alliance).

Il est souhaitable de pallier ces inconvénients de l'état de la technique. Il est notamment souhaitable de fournir une solution qui permette à une passerelle ou équipement gestionnaire de réseaux d'assurer l'interopérabilité avec des stations présentant différentes versions incrémentales d'un protocole de communication tout en garantissant, pour chaque station, un accès à la version la plus récente disponible. US 2018/0310240 A1 décrit un réseau Wi-Fi comportant plusieurs point d'accès supportant différentes versions du protocole 802.11. Lorsqu'une station transmet une requête d'association vers les points d'accès, elle le fait en diffusion. Une station qui reçoit cette demande la fait suivre à un contrôleur. Celui-ci va déterminer les capacités de communication de la station, i.e. quel protocole 802.11 elle supporte et choisir en fonction le point d'accès offrant les meilleures performances. Le processus d'association a lieu ensuite avec le point d'accès sélectionné.

US 2012/0230305 A1 décrit la sélection d'un point d'accès dans un réseau Wi-Fi. En particulier, le niveau du signal reçu ainsi que les capacités UMA du point d'accès, qui sont connues par la connectivité passée sont utilisées.

### EXPOSE DE L'INVENTION

Un objet de la présente invention est de proposer un procédé de gestion par un équipement gestionnaire selon la revendication 1

Ainsi, l'équipement gestionnaire de réseaux permet d'assurer l'interopérabilité avec des stations présentant différentes versions incrémentales d'un protocole de communication et garantit, pour chaque station, une association à la version la plus récente accessible.

Selon un mode de réalisation particulier, la vérification est effectuée en effectuant un nombre prédéterminé de désassociations successives de la station avec le deuxième point d'accès et si le deuxième point d'accès reçoit en réponse pour chaque désassociation des requêtes d'association de la au moins une station avec le deuxième réseau sans fil, la au moins une station n'est pas apte à traiter les balises émises par le premier point d'accès.

Selon un mode de réalisation particulier, le procédé comporte en outre les étapes d'identification si la station dispose d'une fonction de rapport d'environnement permet à la station d'analyser son environnement et de renvoyer au point d'accès des informations relatives à d'autres points d'accès voisins, et réception, de la au moins une station, d'un message comportant des identifiants de point d'accès détectés par la au moins une station ; la vérification étant effectuée à partir des identifiants compris dans le message reçu. Selon un mode de réalisation particulier, le deuxième point d'accès effectue la vérification à partir d'une table en mémoire comportant au moins une information indiquant si la au moins une station est apte à traiter les balises émises par le premier point d'accès, la au moins une information ayant été mémorisée lors d'une précédente association de ladite station.

Selon un mode de réalisation particulier, si la au moins une station n'est pas apte à traiter les balises émises par le premier point d'accès, le procédé comporte en outre l'étape de transfert, à destination de l'utilisateur de la station, d'un message d'invitation à effectuer une mise à jour logicielle ou à changer de station pour permettre l'accès au premier réseau sans fil. Selon un mode de réalisation particulier, le procédé comporte en outre les étapes de : dégradation des performances des signaux émis par le deuxième point d'accès, la dégradation des performances étant mise en oeuvre par une baisse de puissance d'émission et/ou par une réduction des modulations utilisées pour la transmission de données et/ou par une réduction du nombre d'antennes utilisées pour la transmission des données, et rétablissement des performances des signaux émis par le deuxième point d'accès si la au moins une station n'est pas apte à traiter les balises émises par le premier point d'accès.

Selon un mode de réalisation particulier, le premier réseau sans fil et le deuxième réseau sans fil sont des réseaux Wi-Fi, le premier réseau sans fil supportant un amendement basé sur le standard IEEE 802.11, le deuxième réseau sans fil supportant un amendement basé sur le standard IEEE 802.11 plus ancien que celui du premier réseau sans fil.

L'invention concerne également un produit programme d'ordinateur qui comporte des instructions entraînant l'exécution, par un point d'accès d'un équipement gestionnaire de réseaux sans fil, du procédé, lorsque lesdites instructions sont exécutées par un processeur dudit équipement gestionnaire de réseaux sans fil.

L'invention concerne également un support de stockage stockant un programme d'ordinateur comportant des instructions entraînant l'exécution par un point d'accès d'un équipement gestionnaire de réseaux sans fil du procédé, lorsque lesdites instructions sont lues et exécutées par un processeur dudit équipement gestionnaire de réseaux sans fil.

L'invention concerne également un équipement gestionnaire selon la revendication 10.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système de communication sans fil dans lequel la présente invention est implémentée ;
[Fig. 2] illustre schématiquement des échanges de messages entre une passerelle comportant deux points d'accès gérant respectivement un premier réseau et un deuxième réseau, et une première station ;
[Fig. 3] illustre schématiquement des échanges de messages entre la passerelle et la première station dans un cas où la première station se connecte au deuxième réseau ;
[Fig 4] illustre schématiquement des échanges de messages entre la passerelle et une deuxième station ;
[Fig. 5] illustre schématiquement des échanges de messages entre la passerelle et la deuxième station dans un cas où la deuxième station ne supporte pas de fonction de rapport d'environnement ;
[Fig. 6] illustre schématiquement des échanges de messages entre la passerelle et la première et la deuxième stations ;
[Fig. 7] illustre schématiquement l'architecture matérielle d'un point d'accès de la passerelle ;
[Fig. 8] illustre schématiquement l'architecture matérielle d'une station ; et
[Fig. 9] illustre schématiquement un procédé, implémenté par un point d'accès de la passerelle, pour gérer l'accès d'une station au deuxième réseau.

### EXPOSE DETAILLE DE MODES DE REALISATION

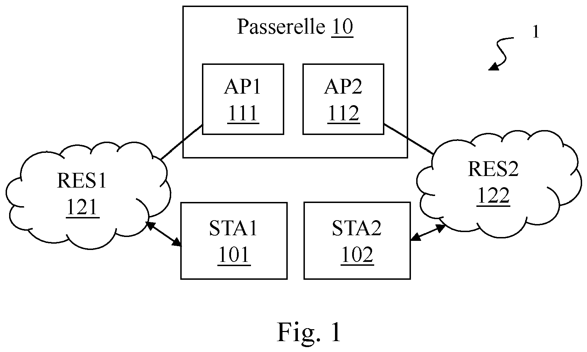

La Fig. 1 illustre ainsi schématiquement un système de communication sans fil 1 dans lequel la présente invention est implémentée.

La présente invention est décrite dans un exemple de réseaux de type IEEE 802.11. La présente invention est aussi applicable aux réseaux cellulaires, par exemple dans le déploiement sur la bande des 5 GHz d'un premier réseau 5G NR-U (3GPP) et d'un deuxième réseau 4G LTE-U (MultiFire Alliance).

Le système de communication sans fil 1 comporte un équipement gestionnaire de réseaux. L'équipement gestionnaire de réseaux peut gérer plusieurs réseaux locaux tels que des réseaux sans fil ou WLAN (« Wireless Local Area Network » en anglais) sur un même canal radio et comporte au moins deux points d'accès (« Access Point » en anglais), chaque point d'accès étant lié à un réseau. Un réseau se distingue d'autres réseaux par une adresse unique appelée « BSSID » (« Basic Service Set IDentifier » en anglais). Dans l'exemple de réalisation présenté ici, l'équipement gestionnaire de réseau est une passerelle domestique 10 telle qu'une passerelle résidentielle comportant deux points d'accès AP1 111 et AP2 112 qui sont chacun en charge d'un réseau sans fil. Le premier point d'accès AP1 111 gère un premier réseau radio ou Wi-Fi RES1 121 et le deuxième point d'accès AP2 112 gère un deuxième réseau RES2 122. Le premier réseau RES1 121 comporte un nombre de fonctionnalités plus important et/ou propose des performances supérieures à celles du deuxième réseau RES2 122. Par exemple, si la passerelle 10 supporte l'amendement 802.11ax (ou « Wi-Fi 6 »), le premier réseau RES1 121 géré par le premier point d'accès AP1 111 présente des caractéristiques correspondantes à l'amendement 802.11ax et le deuxième point d'accès AP2 112 gère un deuxième réseau RES2 122 dont les caractéristiques correspondent à l'amendement 802.11ac (ou « Wi-Fi 5 »), plus ancienne que l'amendement 802.11ax.

Le système de communication sans fil 1 comporte également un ou plusieurs clients identifiés par des stations STA1 101 et STA2 102, situées dans la zone de couverture des premier et deuxième réseaux RES1 121, RES2 122, et qui souhaitent se connecter à la passerelle 10 via un réseau sans fil. Chaque point d'accès émet des balises à destination d'au moins une station STA1 101, STA2 102. Un client, tel que la première station STA1 101, supporte une version de technologie Wi-Fi lui permettant de se connecter au premier réseau RES1 121. La station STA1 101 supporte donc soit la version récente supportée par la passerelle 10, soit une version plus ancienne qui est compatible avec la version récente en raison de la nature incrémentale de la technologie Wi-Fi.

En revanche, un client tel que la deuxième station STA2 102, supporte uniquement une version de technologie Wi-Fi plus ancienne que la version récente supportée par la passerelle 10 et ne peut pas se connecter au premier réseau RES1 121 en raison de problèmes d'interopérabilité. Par exemple, la deuxième station STA2 102 ne peut pas détecter des balises émises par le premier point d'accès AP1 111 en raison de la quantité de données comprises dans la balise. En effet, de telles balises indiquent le support de la version récente, correspondant par exemple à l'amendement 802.11ax, mais également le support des versions précédentes, telles que les amendements 802.11ac, 802.11n, 802. 11a sur la bande 5 GHz et 802.11n, 802.11g, 802.11b sur la bande 2.4 GHz, et sont par conséquent plus volumineuses que des balises supportant l'amendement 802.11ac et les précédentes sur la bande 5 GHz ou 802.11n et les précédentes sur la bande 2.4 GHz. Par exemple, une station conçue pour ne traiter que des balises comprenant une quantité de données inférieure à celle des balises conformes à l'amendement 802.11ax ne peut traiter ces balises.

La deuxième station STA2 102 peut cependant détecter des balises émises par le deuxième point d'accès AP2 112 et peut donc se connecter au deuxième réseau RES2 122.

Dans la présente invention, le deuxième point d'accès AP2 112 peut éventuellement dégrader le mode de fonctionnement du deuxième réseau RES 122 pour inciter la première station STA1 101 à se connecter au premier réseau RES1 121, lui permettant ainsi de bénéficier des fonctionnalités les plus récentes qui lui sont accessibles.

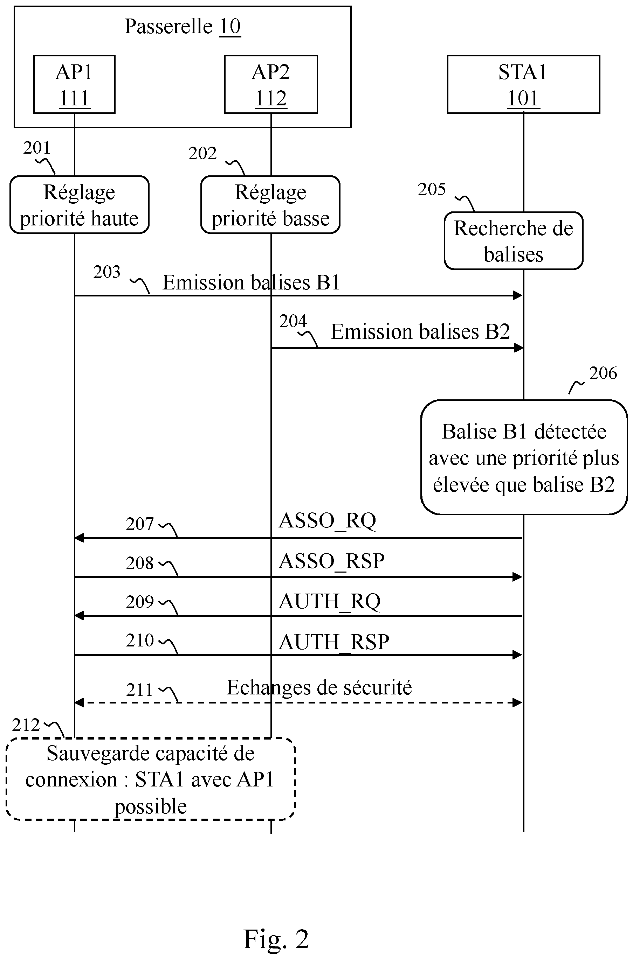

Dans un mode de réalisation particulier, la passerelle 10 comporte au moins trois points d'accès gérant chacun un réseau. Chaque réseau supporte une version de technologie Wi-Fi différente. Une station est incitée à se connecter au réseau dont la version de technologie Wi-Fi est la version la plus récente accessible par ladite station. L'extension de la présente invention à plus de deux points d'accès est triviale, l'objectif étant d'inciter une station à se connecter au réseau dont la version de technologie Wi-Fi est la version la plus récente accessible par ladite station. La **Fig. 2** illustre schématiquement des échanges de messages entre la passerelle 10 et la première station STA1 101.

Dans des étapes 201 et 202, une priorité est attribuée aux premier et deuxième réseaux RES1 121 et RES2 122 de sorte que le premier réseau RES1 121 supportant la version récente soit prioritaire par rapport au deuxième réseau RES2 122 supportant une version antérieure. De manière générale, si la passerelle 10 comporte au moins trois points d'accès, la priorité attribuée à un réseau augmente lorsque la version supportée par le réseau est plus récente.

Le premier réseau RES1 121 est donc réglé en priorité haute dans l'étape 201 et le deuxième réseau RES2 122 est réglé en priorité basse dans l'étape 202. La priorité du deuxième réseau RES2 122 est abaissée en effectuant une dégradation des performances des signaux émis par le deuxième point d'accès AP2 122. Par exemple, le premier point d'accès AP1 111 émet des balises avec une puissance de transmission de signal maximale tandis que le deuxième point d'accès émet des balises avec une puissance de transmission de signal inférieure à celles émises par le premier point d'accès AP1 111. Alternativement, la priorité des réseaux RES1 121 et RES2 122 peut être réglée en modifiant la quantité de flux spatiaux (« spatial stream » en anglais) permettant à un réseau de priorité plus élevée d'émettre via un nombre plus important d'antennes et ainsi, en multipliant le nombre de faisceaux pour la transmission de données, d'avoir un débit plus important. La priorité des réseaux RES1 121 et RES2 122 peut alternativement être réglée en modifiant le débit d'émission/réception du réseau maximal signalé à l'aide de schémas de modulation et de codage (« Modulation and Coding Scheme » en langue anglaise) dans la balise, de manière à supporter un débit plus élevé pour des réseaux de plus forte priorité et à supporter un débit plus faible pour des réseaux de plus faible priorité. Dans des étapes 203 et 204, chaque point d'accès AP1 111 et AP2 112 émet respectivement des balises de premier type B1 et de deuxième type B2 correspondant aux réseaux respectifs RES1 121 et RES2 122.

Dans une étape 205, la première station STA1 101 lance une recherche de balises afin d'identifier des réseaux disponibles. Dans une étape 206, la première station STA1 101 détecte les balises de premier et deuxième types B1 et B2 émises par les deux points d'accès respectifs AP1 111 et AP2 112. En outre, la première station STA1 101 détecte les balises de premier type B1 avec une priorité plus élevée que les balises de deuxième type B2. Par exemple, la première station STA1 101 détecte les balises de premier type B1 avec une puissance de signal plus élevée que les balises de deuxième type B2. La première station STA1 101 est ainsi incitée à choisir le réseau offrant les performances les plus importantes selon un algorithme de sélection de réseaux dont elle dispose en interne.

La première station STA1 101 cherche alors à s'associer au premier réseau RES1 121, identifié avec une priorité plus élevée. La première station STA1 101 échange des messages avec le premier point d'accès AP1 111 en suivant une procédure d'association ASSOCIATION comportant des étapes 207 à 211. Dans une étape 207, la première station STA1 101 transmet une requête d'association ASSO_RQ au premier point d'accès AP1 111. Le premier point d'accès AP1 111 renvoie ensuite dans une étape 208 une réponse d'association ASSO_RSP à la première station STA1 101. Dans une étape 209, la première station STA1 101 transmet alors une requête d'authentification AUTH_RQ au premier point d'accès AP1 111 et le premier point d'accès AP1 111 renvoie à la première station STA1 101 une réponse d'authentification AUTH_RSP. Dans une étape 211 optionnelle, la première station STA1 101 et le premier point d'accès échangent des messages de sécurité tels que des clés d'encryption afin de sécuriser les transmissions ultérieures.

Ainsi, en raison d'un niveau de priorité du premier réseau RES1 121 plus élevé que le niveau de priorité d'un autre réseau émis par la passerelle 10, par exemple le deuxième réseau RES2 122, la première station STA1 101 se connecte préférentiellement audit premier réseau RES1 121 et peut ainsi bénéficier des fonctionnalités les plus récentes supportées par la version de technologie Wi-Fi dont elle dispose.

Dans une étape 212 optionnelle, la passerelle 10 effectue une sauvegarde de la capacité de connexion de la première station STA1 101 en enregistrant que ladite première station STA1 101 est capable de se connecter au premier réseau RES1 121 sur le premier point d'accès AP1 111.

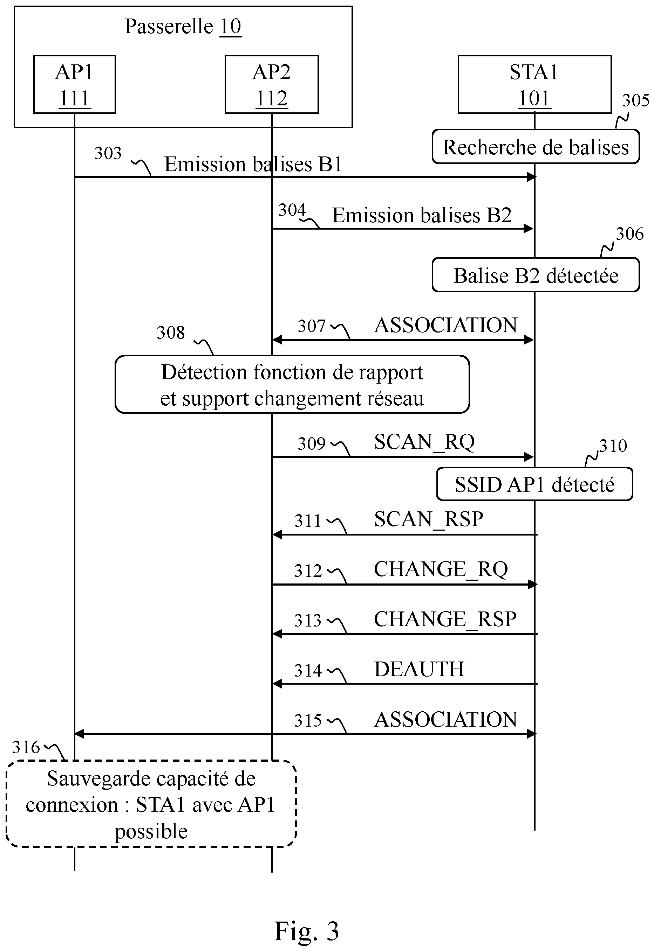

La **Fig. 3** illustre schématiquement des échanges de messages entre la passerelle 10 et la première station STA1 101 dans un cas où la première station STA1 101 cherche à se connecter dans un premier temps au deuxième réseau RES2 122. Comme précédemment décrit en lien avec la Fig. 2, chaque point d'accès AP1 111 et AP2 112 émet respectivement des balises de premier type B1 et de deuxième type B2 dans des étapes 303 et 304 respectives ; et la première station STA1 101 lance une recherche de balises dans une étape 305. Dans certains cas, la première station STA1 101 cherche à se connecter au deuxième réseau RES2 122. Par exemple, les priorités de réseaux ne sont pas distinctes au moment où la première station STA1 101 cherche à se connecter ou pour une autre raison les balises de premier type B1 ne sont pas détectées au moment où la première station STA1 101 effectue la recherche de balises.

Dans une étape 307, la première station STA1 101 échange des messages avec le point d'accès AP2 112 afin de s'y associer en suivant la procédure d'association, ASSOCIATION correspondant aux étapes 207 à 211 décrites précédemment en relation avec la Fig. 2, et s'associe au deuxième réseau RES2 122.

Dans une étape 308, le deuxième point d'accès AP2 112 identifie si la première station STA1 101 dispose d'une fonction de rapport d'environnement telle que la fonction de mesure basique de l'amendement IEEE 802.11k (Measurement Request/Report en anglais). Une fonction de rapport d'environnement permet à une station STA1 101, STA2 102 d'analyser son environnement et de renvoyer au point d'accès auquel elle est associée des informations relatives à d'autres points d'accès voisins. Une station STA1 101, STA2 102 peut analyser son environnement de manière passive, en analysant des balises diffusées par des réseaux voisins, ou de manière active, en envoyant une demande de présence à destination d'un réseau dont l'identifiant est connu.

Dans l'étape 308, le deuxième point d'accès AP2 112 identifie en outre si la station STA1 101 dispose d'un support de changement de réseau tel que mis en oeuvre par une trame de transition spécifique de l'amendement IEEE 802.11v (BSS Transition Management Request/Report en anglais).

Le support de changement de réseau permet à un point d'accès AP1 111, AP2 112 de demander à une station STA1 101, STA2 102 qui lui serait associée de s'associer à un autre point d'accès en envoyant une trame de transition contenant l'identité de l'autre point d'accès.

Dans le cas où la fonction de rapport d'environnement est détectée, le deuxième point d'accès AP2 112 peut alors envoyer, dans une étape 309, une requête d'analyse d'environnement SCAN_RQ à la première station STA1 101. La requête d'analyse d'environnement SCAN_RQ demande d'identifier des réseaux disponibles sur le même canal que celui du deuxième réseau RES2 122 auquel la deuxième station STA2 102 est connectée et portant le nom de réseau ou SSID (« Service Set Identifier » en anglais) correspondant au premier réseau RES1 121. Dans une étape 310, la première station STA1 101 détecte le premier réseau RES1 121. Par exemple, si les réseaux normal RES1 121 et bridé RES2 122 ont le même SSID, la première station STA1 101 détecte deux réseaux correspondant audit SSID. Dans un autre exemple, si les premier réseau RES1 121 et le deuxième réseau RES2 122 ont des SSID différents, la première station STA1 101 détecte un seul réseau.

Dans une étape 311, la première station STA1 101 transmet le résultat de l'analyse d'environnement SCAN_RSP au deuxième point d'accès AP2 112.

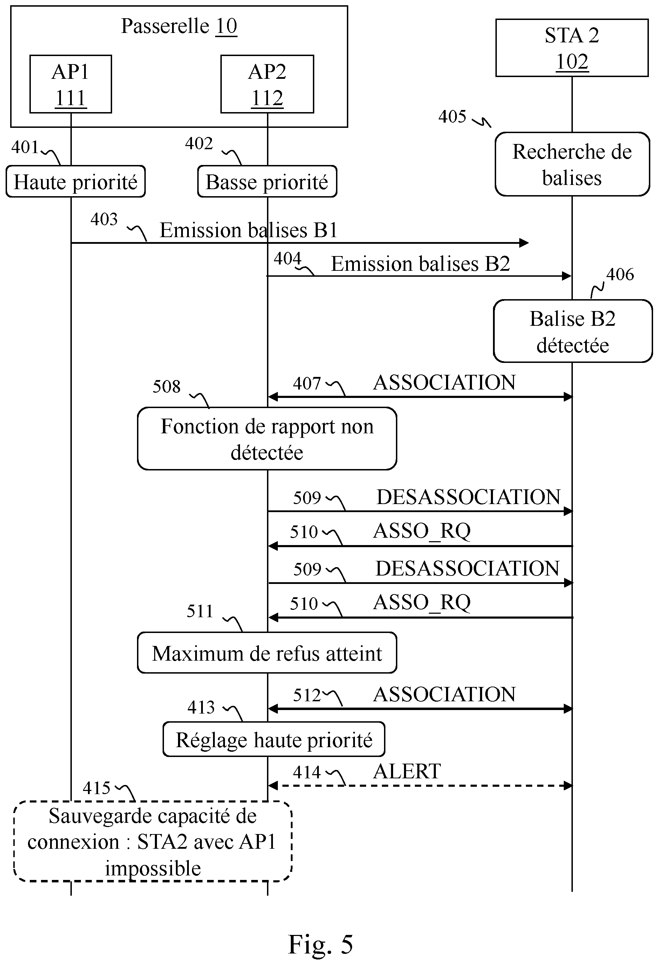

Dans le cas où le support de changement de réseau est détecté, le deuxième point d'accès AP2 112 envoie, dans une étape 312, une requête de changement de réseau CHANGE _RQ à la première station STA1 101 lui demandant de se désassocier du deuxième réseau RES2 122 pour se réassocier au premier réseau RES1 121. La requête de changement de réseau CHANGE _RQ peut par exemple être mise en oeuvre par une trame de transition spécifique telle que celle supportée par l'amendement IEEE 802.11v (en anglais BSS Transition Management). La première station STA1 101 accepte la requête de changement de réseau CHANGE_RQ et peut en avertir optionnellement le point d'accès AP2 112 dans une étape 313 en répondant par une réponse de changement de réseau CHANGE_RSP et en envoyant dans une étape 314 une demande de suppression d'authentification DEAUTH auprès du deuxième point d'accès AP2 112. Si le point d'accès AP2 112 ne reçoit pas de réponse de changement de réseau CHANGE _RSP ou de demande de suppression d'authentification DEAUTH, alors le deuxième point d'accès AP2 112 désassocie la première station STA1 101 du deuxième réseau RES2 122. Dans le cas où la fonction de rapport d'environnement n'est pas détectée et/ou le support de changement de réseau n'est pas détecté par le deuxième point d'accès AP2 112 à l'étape 308, les étapes 309 à 314 sont remplacées par une étape non illustrée ici lors de laquelle le deuxième point d'accès AP2 112 désassocie la première station STA1 101 du deuxième réseau RES2 122. Si la première station STA1 101 cherche à se reconnecter au deuxième réseau RES2 122, le deuxième point d'accès AP2 112 réitèrera la désassociation de ladite première station STA1 101 jusqu'à ce qu'elle cherche à se connecter au premier réseau RES1 121 ou jusqu'à ce qu'un nombre de désassociations maximal soit atteint, comme décrit par la suite en lien avec la Fig. 5.

Dans une étape suivante 315, la première station STA1 101 échange des messages avec le point d'accès AP1 111 pour s'associer au premier réseau RES1 121 en suivant la procédure d'association ASSOCIATION décrite en Fig. 2.

Dans une étape 316 optionnelle, la passerelle 10 effectue de manière similaire à l'étape 212 une sauvegarde de la capacité de connexion de la première station STA1 101 en enregistrant que ladite première station STA1 101 est capable de se connecter sur le premier réseau RES1 121 avec le premier point d'accès AP1 111.

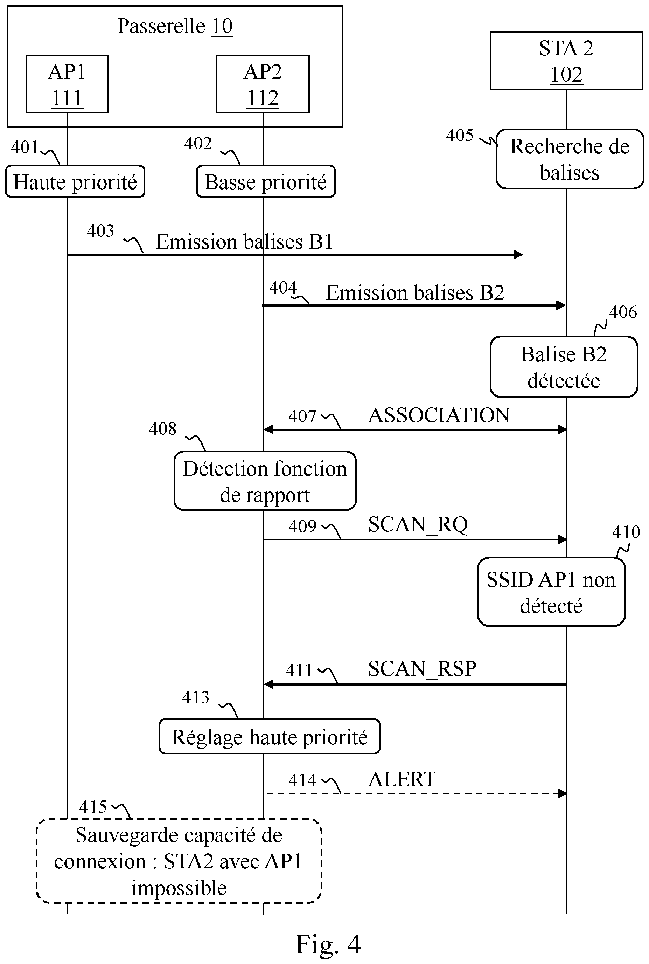

La **Fig. 4** illustre schématiquement des échanges de messages entre la passerelle 10 et la deuxième station STA2 102 dans un cas où la deuxième station STA2 102 dispose d'une fonction de rapport d'environnement. Dans des étapes 401 et 402, chaque point d'accès AP1 111 et AP2 112 règle la priorité du réseau qu'elle gère, premier réseau RES1 121 et deuxième réseau RES2 122, de la même manière qu'aux étapes respectives 201 et 202 de la Fig. 2. Comme précédemment décrit, chaque point d'accès AP1 111 et AP2 112 émet en outre respectivement des balises de premier type B1 et de deuxième type B2 correspondant aux réseaux normal RES1 121 et bridé RES2 122 respectifs, dans des étapes 403 et 404 respectives. Dans une étape 405, la deuxième station STA2 102 lance une recherche de balises. Dans une étape 406, la deuxième station STA2 102 détecte les balises de deuxième type B2 émises par le point d'accès AP2 112 et correspondant au deuxième réseau RES2 122. La deuxième station STA2 102 ne peut pas détecter les balises de premier type B1 correspondant au premier réseau RES1 121 en raison d'un problème d'interopérabilité tel que décrit en relation avec la Fig. 1. Dans une étape 407, la deuxième station STA2 102 échange des messages avec le point d'accès AP2 112 selon la procédure d'association ASSOCIATION et s'associe au deuxième réseau RES2 122.

Dans une étape 408, similaire à l'étape 308, le deuxième point d'accès AP2 112 identifie si la deuxième station STA2 102 dispose d'une fonction de rapport d'environnement. Dans le cas où une fonction de rapport d'environnement est détectée, le deuxième point d'accès AP2 112 envoie à la deuxième station STA2 102 dans une étape 409 une requête d'analyse d'environnement SCAN_RQ, similairement à l'étape 309. Un cas où aucune fonction de rapport d'environnement n'est détectée est décrit par la suite en relation avec la Fig. 5.

Dans une étape 410, la deuxième station STA2 102 effectue l'analyse et ne détecte pas le premier point d'accès AP1 111. Par exemple, si les réseaux normal RES1 121 et bridé RES2 122 ont le même SSID, la deuxième station STA2 102 détecte un seul réseau correspondant audit SSID. Dans un autre exemple, si le premier réseau RES1 121 et le deuxième réseau RES2 122 ont des SSID différents, la deuxième station STA2 102 ne détecte rien.

Dans une étape 411, la deuxième station STA2 102 transmet le résultat de l'analyse d'environnement au deuxième point d'accès AP2 112.

Dans une étape 413, le premier réseau RES1 121 n'étant pas détecté par la deuxième station STA2 102, le deuxième point d'accès AP2 112 augmente la priorité du deuxième réseau RES2 122 en rétablissant les performances des signaux émis par le deuxième point d'accès AP2 123. Par exemple, le deuxième point d'accès augmente la puissance de transmission du signal au même niveau que celle du premier réseau RES1 121. Ainsi, la deuxième station STA2 102 bénéficie d'un service comparable à celui qu'elle aurait sur le premier réseau RES1 121 si elle pouvait s'y connecter. Dès que le deuxième réseau RES2 122 n'a plus de station connectée, par exemple lorsque la deuxième station STA2 102 se déconnecte et qu'aucune autre station n'est connectée, le deuxième point d'accès AP2 112 diminue à nouveau la priorité du deuxième réseau RES2 122.

Dans une étape optionnelle 414, le deuxième point d'accès AP2 112 transmet un message d'alerte ALERT à la deuxième station STA2 102 permettant d'avertir un utilisateur de ladite deuxième station STA2 102 d'un problème d'interopérabilité et lui indiquant de vérifier le logiciel de gestion de connexion sans fil appelé aussi pilote et/ou de changer son équipement. L'utilisateur peut par exemple être averti par le biais d'une interface de communication de la passerelle résidentielle telle qu'un écran ou un haut-parleur, ou via un portail captif dans le cadre d'un accès à Internet.

Dans une étape optionnelle 415, la passerelle 10 effectue une sauvegarde de la capacité de connexion de la deuxième station STA2 102 en enregistrant que ladite deuxième station STA2 102 est incapable de se connecter au premier réseau RES1 121.

La **Fig. 5** illustre schématiquement des échanges de messages entre la passerelle 10 et la deuxième station STA2 102 dans un cas où la deuxième station STA2 102 ne dispose pas d'une fonction de rapport d'environnement.

Les étapes 401 à 407 sont les mêmes que celles décrites précédemment en relation avec la Fig. 4. A la fin de l'étape 407, la deuxième station STA2 102 est connectée au deuxième réseau RES2 122.

Dans une étape 408, le deuxième point d'accès AP2 112 identifie que la deuxième station STA2 102 ne dispose pas de fonction de rapport d'environnement.

Dans une étape 509 suivante, le deuxième point d'accès AP2 112 désassocie la deuxième station STA2 102 en envoyant un message de désassociation DESASSOCIATION. En parallèle, le deuxième point d'accès AP2 112 initialise un compteur qui s'incrémente à chaque envoi de message de désassociation DESASSOCIATION. Alternativement, le deuxième point d'accès AP2 112 ne répond pas à la requête d'association ASSO_RQ de la deuxième station STA2 102 et le compteur incrémental compte chaque requête d'association ASSO_RQ reçue et restée sans réponse.

Dans une étape 510, la deuxième station STA2 102 cherche à se réassocier au deuxième réseau RES2 122 puisqu'elle ne détecte pas de balises de premier type B1 issues du premier réseau RES1 121. La deuxième station STA2 102 transmet donc au deuxième point d'accès AP2 112 une requête d'association ASSO_RQ.

Le deuxième point d'accès AP2 112 réitère alors l'étape 509 afin de refuser la requête d'association ASSO_RQ puis la deuxième station STA2 102 réitère l'étape 510 et renvoie à nouveau la requête d'association ASSO_RQ.

Dans une étape 511, la valeur du compteur incrémental dépasse un nombre maximal de tentatives de connexion prédéfini. Le deuxième point d'accès AP2 112 arrête alors de refuser les requêtes d'association ASSO_RQ de la deuxième station STA2 102. Alternativement, le deuxième point d'accès AP2 112 utilise un compteur de temps et arrête de refuser les requêtes d'association ASSO_RQ de la deuxième station STA2 102 lorsque le compteur de temps atteint une durée maximale prédéfinie.

Dans une étape 512, la deuxième station STA2 102 renvoie une requête d'association ASSO_RQ, qui est acceptée par le deuxième point d'accès AP2 112 et des échanges de messages s'établissent entre la deuxième station STA2 102 et le deuxième point d'accès AP2 112 selon la procédure d'association ASSOCIATION. La deuxième station STA2 102 s'associe ainsi au deuxième réseau RES2 122.

Les étapes suivantes 413, 414 et 415, décrites précédemment, permettent d'augmenter la priorité du deuxième réseau RES2 122, d'alerter la station STA2 102 sur un problème d'interopérabilité et de sauvegarder l'incapacité de connexion de la deuxième station STA2 102 avec le premier point d'accès AP1 111.

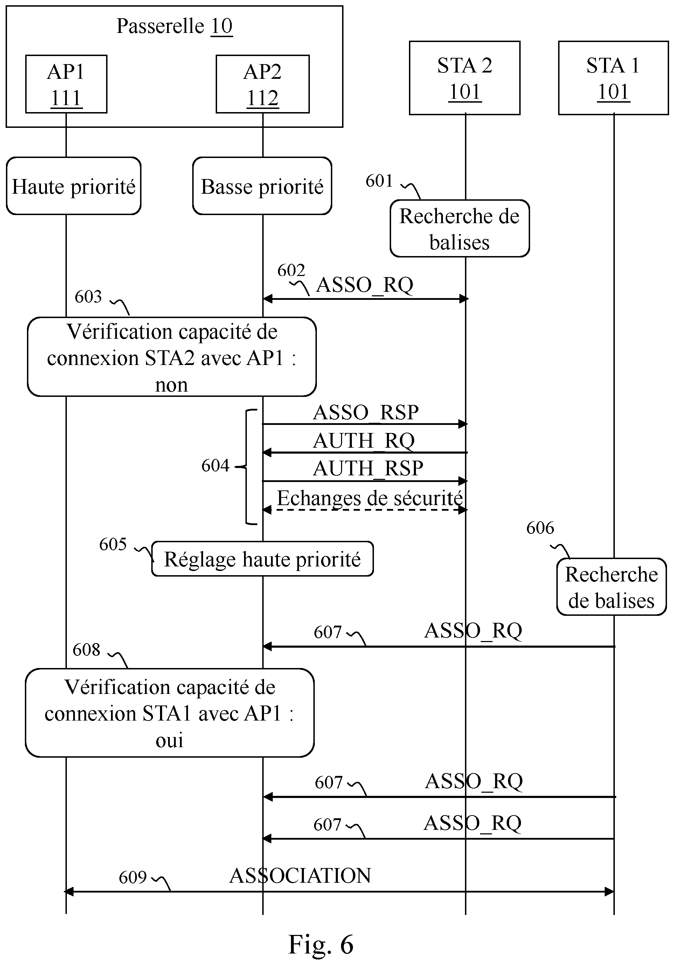

La **Fig. 6** illustre schématiquement des échanges de messages entre la passerelle 10 et la première et la deuxième stations STA1 101 et STA2 102 dans un exemple de gestion d'un historique de connexions. Lorsque chaque station STA1 101 et STA2 102 se connecte pour la première fois à la passerelle 10, la passerelle 10 effectue une sauvegarde sous forme de table de la capacité de connexion correspondante à la station STA1 101 ou STA2 102, comme présenté aux étapes 212 ou 316 pour la station STA1 101 ou à l'étape 415 pour la station STA2 102. La passerelle 10 associe ainsi à chaque station STA1 101, STA2 102 déjà connue, une information de capacité de connexion de ladite station STA1 101, STA2 102 au réseau RES1 121, RES2 122. La Fig. 6 présente plus précisément des échanges de messages lorsque les stations STA1 101 et STA2 102 cherchent à se reconnecter à la passerelle 10. Le premier réseau RES1 121 présente une priorité haute réglée par le premier point d'accès AP1 111 et le deuxième réseau RES2 122 présente une priorité inférieure à celle du premier réseau RES1 121, réglée par le deuxième point d'accès AP2 112.

Dans une étape 601, la deuxième station STA2 102 lance une recherche de balises. Dans une étape 602 suivante, après avoir détecté uniquement les balises de deuxième type B2 émises par le deuxième point d'accès AP2 112, la deuxième station STA2 102 s'associe au deuxième réseau RES2 122 par des échanges de messages avec le deuxième point d'accès AP2 112 selon la procédure d'association ASSOCIATION.

Dans une étape 603, le deuxième point d'accès AP2 112 récupère à partir de la table en mémoire des informations de capacité de connexion associées à la deuxième station STA2 102, sauvegardées par la passerelle 10 lors d'une précédente association de la deuxième station STA2 102 au premier réseau RES1 121 ou au deuxième réseau RES2 122. Le deuxième point d'accès AP2 112 identifie que la deuxième station STA2 102 n'a pas la capacité de se connecter sur le premier réseau RES1 121 avec le point d'accès AP1 111. Les informations de capacité de connexion ainsi récupérées permettent au deuxième point d'accès AP2 112 de s'assurer que la station STA2 102 ne peut pas se connecter au premier réseau RES1 121 sans avoir besoin d'envoyer une requête d'analyse d'environnement SCAN_RQ ni de désassocier plusieurs fois la deuxième station STA2 102 du deuxième réseau RES2 122.

Dans une étape 605 suivante, le deuxième point d'accès augmente la priorité du deuxième réseau RES2 122.

Dans une étape 606, la première station STA1 101 lance une recherche de balises. La première station STA1 101 peut par exemple détecter les deux réseaux normal RES1 121 et bridé RES2 122 avec la même priorité si la priorité du deuxième réseau RES2 122 a été augmentée et chercher à se connecter au deuxième réseau RES2 122.

Dans une étape 607, la première station STA1 101 envoie une requête d'association ASSO_RQ au deuxième point d'accès AP2 112.

Dans une étape 608, le deuxième point d'accès AP2 112 récupère à partir de la table en mémoire des informations de capacité de connexion associées à la première station STA1 101, sauvegardées par la passerelle 10 lors d'une précédente association. Le deuxième point d'accès AP2 112 identifie que la première station STA1 101 a la capacité de se connecter sur le premier réseau RES1 121. Les informations de capacité de connexion ainsi récupérées permettent au deuxième point d'accès AP2 112 de s'assurer que la première station STA1 101 peut se connecter au premier réseau RES1 121 sans avoir besoin d'envoyer une requête d'analyse d'environnement SCAN_RQ ni de désassocier la première station STA1 101 du deuxième réseau RES2 122. Le deuxième point d'accès AP2 112 refuse alors de répondre à chaque requête d'association ASSO_RQ envoyée par la première station STA1 101, même si la première station STA1 101 réitère plusieurs fois l'envoi d'une telle requête d'association ASSO_RQ. Alternativement, le deuxième point d'accès AP2 112 peut envoyer un message de désassociation DESASSOCIATION à la première station STA1 101 ou envoyer une requête de changement de réseau CHANGE_RQ à la première station STA1 101 lui demandant de se désassocier du deuxième réseau RES2 122 pour se réassocier au premier réseau RES1 121. Dans une étape 609, lorsque la première station STA1 101 cherche à se connecter au premier réseau RES1 121, le premier point d'accès AP1 111 accepte la requête d'association ASSO_RQ. La première station STA1 101 s'associe ainsi au premier réseau RES1 121 en suivant la procédure d'association ASSOCIATION.

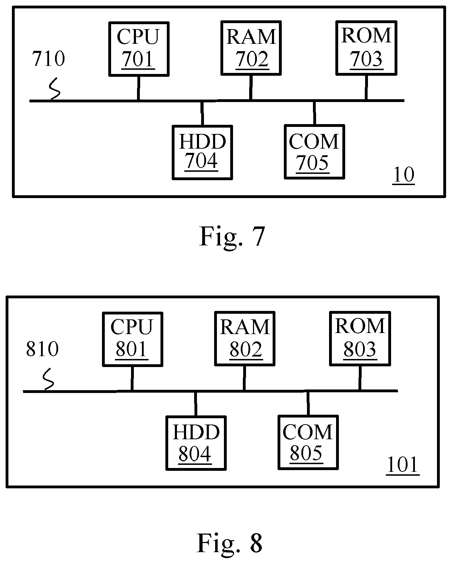

Dans un mode de réalisation particulier, un test périodique est effectué par le deuxième point d'accès AP2 112 pour mettre à jour les informations de capacité de connexion. Par exemple, le deuxième point d'accès AP2 112 récupère les informations de capacité de connexion comme indiqué aux étapes 603 et 608 pendant une période de temps prédéfinie. A la fin de ladite période de temps, le deuxième point d'accès AP2 112 ne récupère plus les informations de capacité de connexion mais effectue des échanges de messages en considérant qu'une station STA1 101, STA2 102 qui envoie une requête d'association ASSO_RQ cherche à se connecter pour la première fois. Afin de ne pas encombrer la mémoire de la passerelle 10, les informations de capacité de connexion peuvent en outre être supprimées à la fin de chaque période de temps. Alternativement, le deuxième point d'accès AP2 112 récupère les informations de capacité de connexion à la fin de chaque période de temps, et prend en compte seulement les informations de capacité de connexion relatives aux stations STA1 101, STA2 102 ayant déjà pu se connecter au premier réseau RES1 121. En d'autres termes, le deuxième point d'accès AP2 112 considère qu'une station STA1 101, STA2 102, précédemment identifiée par la passerelle 10, se connecte pour la première fois seulement si les informations de capacité de connexion de ladite station STA1 101, STA2 102 indiquent que la connexion au premier réseau RES1 121 est impossible. La **Fig. 7** illustre schématiquement l'architecture matérielle de la passerelle 10. La passerelle 10 comporte alors, reliés par un bus de communication 710 ; un processeur ou CPU (« Central Processing Unit » en anglais) 701 ; une mémoire vive RAM 702 ; une mémoire morte ROM (« Read Only Memory » en anglais) 703 ; une unité de stockage 704, telle qu'un disque dur HDD (« Hard Disk Drive » en anglais), ou un lecteur de support de stockage, tel qu'un lecteur de cartes SD (« Secure Digital » en anglais) ; et une interface COM 705 permettant de communiquer avec des terminaux tels que les stations STA1 101, STA2 102.

Le processeur CPU 701 est capable d'exécuter des instructions chargées dans la RAM 702 à partir de la ROM 703, d'une mémoire externe (telle qu'une carte SD), d'un support de stockage, ou d'un réseau de communication. Lorsque la passerelle 10 est mise sous tension, le processeur CPU 701 est capable de lire de la RAM 402 des instructions et de les exécuter. Ces instructions forment un programme d'ordinateur causant l'implémentation, par le processeur CPU 701, de tout ou partie des étapes décrites ici en relation avec le premier ou le deuxième point d'accès AP1 111, AP2 112. Tout ou partie desdites étapes peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais). D'une manière générale, la passerelle 10 comporte ainsi de la circuiterie électronique configurée pour implémenter tout ou partie des étapes décrites ici en relation avec les points d'accès AP1 111, AP2 112.

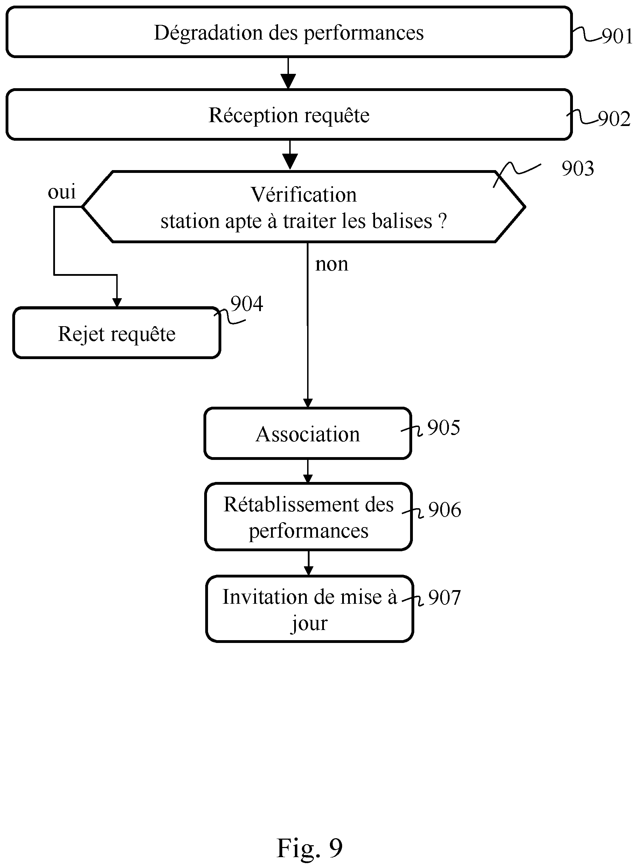

La **Fig. 8** illustre schématiquement l'architecture matérielle d'une station STA1 101, l'architecture matérielle d'une deuxième station STA2 102 étant identique à celle de la station STA1 101. La station STA1 101 comporte alors, reliés par un bus de communication 810 ; un processeur ou CPU (« Central Processing Unit » en anglais) 801 ; une mémoire vive RAM 802 ; une mémoire morte ROM (« Read Only Memory » en anglais) 803 ; une unité de stockage 804, telle qu'un disque dur HDD (« Hard Disk Drive » en anglais), ou un lecteur de support de stockage, tel qu'un lecteur de cartes SD (« Secure Digital » en anglais) ; et une interface COM 805 permettant de communiquer avec les points d'accès AP1 111, AP2 112 de la passerelle 10. Le processeur CPU 801 est capable d'exécuter des instructions chargées dans la RAM 802 à partir de la ROM 803, d'une mémoire externe (telle qu'une carte SD), d'un support de stockage, ou d'un réseau de communication. Lorsque la station STA1 101 est mise sous tension, le processeur CPU 801 est capable de lire de la RAM 802 des instructions et de les exécuter. Ces instructions forment un programme d'ordinateur causant l'implémentation, par le processeur CPU 801, de tout ou partie des étapes décrites ici en relation avec la station STA1 101. Tout ou partie desdites étapes peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais). D'une manière générale, la station STA1 101 comporte ainsi de la circuiterie électronique configurée pour implémenter tout ou partie des étapes décrites ici en relation avec ladite station STA1 101. La **Fig. 9** illustre schématiquement un procédé, implémenté par le deuxième point d'accès AP2 112 de la passerelle 10, pour gérer l'accès d'une station STA1 101, STA2 102 au deuxième réseau RES2 122.

Dans une étape 901 optionnelle, le deuxième point d'accès AP2 112 dégrade les performances du deuxième réseau RES2 122 afin d'inciter une station STA1 101, STA2 102 à se connecter au premier réseau RES1 121 dont les performances ne sont pas dégradées.

Dans une étape 902, le deuxième point d'accès AP2 112 réceptionne une requête d'association ASSO_RQ issue d'une station STA1 101, STA2 102 souhaitant se connecter.

Dans une étape 903 suivante, le deuxième point d'accès effectue une vérification permettant d'identifier si la station STA1 101, STA2 102 souhaitant se connecter est apte à traiter les balises émises par le premier point d'accès AP1 111. Si c'est le cas, une étape 904 est exécutée. Sinon, une étape 905 est exécutée.

Dans l'étape 904, le deuxième point d'accès AP2 112 rejette la requête d'association ASSO_RQ réceptionnée à l'étape 902. Par exemple, le deuxième point d'accès AP2 112 envoie une requête de changement de réseau CHANGE_RQ à la station STA1 101, STA2 102 souhaitant se connecter. Alternativement, le deuxième point d'accès AP2 112 renvoie un message de désassociation DESASSOCIATION à la station STA1 101, STA2 102 souhaitant se connecter ou bien ne répond pas à la requête d'association ASSO_RQ.

Dans l'étape 905, le deuxième point d'accès AP2 112, ayant identifié que la station STA1 101, STA2 102 souhaitant se connecter n'est pas apte à traiter les balises émises par le premier point d'accès AP1 111, effectue une association de la station STA1 101, STA2 102 en question en acceptant la requête d'association ASSO_RQ. Par exemple, le deuxième point d'accès AP2 112 envoie une réponse d'association ASSO_RSP à ladite station STA1 101, STA2 102.

Dans une étape 906 suivante, et si l'étape 901 a été effectuée, le deuxième point d'accès AP2 112 rétablit les performances du deuxième réseau RES2 122 au même niveau que celles du premier réseau RES1 121.

Dans une étape 907 optionnelle, le deuxième point d'accès AP2 112 envoie à destination de l'utilisateur de la station STA1 101, STA2 102 une invitation à effectuer une mise à jour logicielle ou à changer de station pour permettre l'accès au premier réseau RES1 121. Par exemple, le deuxième point d'accès transmet un message d'alerte ALERT tel que décrit précédemment à l'étape 414.

## Revendications

1. Procédé de gestion par un équipement gestionnaire d'au moins un premier et un deuxième réseaux sans fils, l'équipement gestionnaire de réseaux sans fil comportant un premier point d'accès du premier réseau sans fil et un deuxième point d'accès du deuxième réseau sans fil, le premier réseau sans fil ayant des fonctionnalités et/ou des performances supérieures au deuxième réseau sans fil, chaque point d'accès émettant des balises permettant à une station située dans la zone de couverture des dites balises de s'associer au réseau sans fil dudit point d'accès, au moins une station étant située dans la zone de couverture des premier et deuxième réseaux sans fil, la au moins une station étant apte à traiter les balises émises par le premier et le deuxième points d'accès ou étant apte à traiter les balises émises par le deuxième point d'accès et n'étant pas apte à traiter les balises émises par le premier point d'accès, **caractérisé en ce que** le procédé comporte les étapes, exécutées par le deuxième point d'accès de :
- réception (307,) d'une requête d'association issue de la au moins une station,
- association (307) de la au moins une station avec le deuxième point d'accès,
- vérification (308) si la au moins une station est apte à traiter les balises émises par le premier point d'accès,
- - échange de messages avec la au moins une station dans une procédure d'association,
- désassociation (312) de la au moins une station avec le deuxième point d'accès si la au moins une station est apte à traiter les balises émises par le premier point d'accès,

2. Procédé selon la revendication 1, **caractérisé en ce que** la vérification est effectuée en effectuant un nombre prédéterminé de désassociations successives de la station avec le deuxième point d'accès et si le deuxième point d'accès reçoit en réponse pour chaque désassociation des requêtes d'association de la au moins une station avec le deuxième réseau sans fil, la au moins une station n'est pas apte à traiter les balises émises par le premier point d'accès.

3. Procédé selon la revendication 1, **caractérisé en ce que** le procédé comporte en outre les étapes de :
- identification si la station dispose d'une fonction de rapport d'environnement permet à la station d'analyser son environnement et de renvoyer au point d'accès des informations relatives à d'autres points d'accès voisins,
- réception, de la au moins une station, d'un message comportant des identifiants de point d'accès détectés par la au moins une station et **en ce que** la vérification est effectuée à partir des identifiants compris dans le message reçu.

4. Procédé selon la revendication 1, **caractérisé en ce que** le deuxième point d'accès effectue la vérification à partir d'une table en mémoire comportant au moins une information indiquant si la au moins une station est apte à traiter les balises émises par le premier point d'accès, la au moins une information ayant été mémorisée lors d'une précédente association de ladite station.

5. Procédé selon la revendication 1, **caractérisé en ce que** si la au moins une station n'est pas apte à traiter les balises émises par le premier point d'accès, le procédé comporte en outre l'étape de :
- transfert, à destination de l'utilisateur de la station, d'un message d'invitation à effectuer une mise à jour logicielle ou à changer de station pour permettre l'accès au premier réseau sans fil.

6. Procédé selon l'une des revendications 1 à 5, **caractérisé en ce que** le procédé comporte en outre les étapes de :
- dégradation des performances des signaux émis par le deuxième point d'accès, la dégradation des performances étant mise en oeuvre par une baisse de puissance d'émission et/ou par une réduction des modulations utilisées pour la transmission de données et/ou par une réduction du nombre d'antennes utilisées pour la transmission des données,
- rétablissement des performances des signaux émis par le deuxième point d'accès si la au moins une station n'est pas apte à traiter les balises émises par le premier point d'accès.

7. Procédé selon l'une des revendications 1 à 6, **caractérisé en ce que** le premier réseau sans fil et le deuxième réseau sans fil sont des réseaux Wi-Fi, le premier réseau sans fil supportant un amendement basé sur le standard IEEE 802.11, le deuxième réseau sans fil supportant un amendement basé sur le standard IEEE 802.11 et plus ancien que celui du premier réseau sans fil.

8. Produit programme d'ordinateur, **caractérisé en ce qu'**il comporte des instructions entraînant l'exécution, par un point d'accès d'un équipement gestionnaire de réseaux sans fil, du procédé selon l'une quelconque des revendications 1 à 7, lorsque lesdites instructions sont exécutées par un processeur dudit équipement gestionnaire de réseaux sans fil.

9. Support de stockage, **caractérisé en ce qu'**il stocke un programme d'ordinateur comportant des instructions entraînant l'exécution par un point d'accès d'un équipement gestionnaire de réseaux sans fil du procédé selon l'une quelconque des revendications 1 à 7, lorsque lesdites instructions sont lues et exécutées par un processeur dudit équipement gestionnaire de réseaux sans fil.

10. Equipement gestionnaire d'au moins un premier et un deuxième réseaux sans fil, l'équipement gestionnaire de réseaux sans fil comportant un premier point d'accès du premier réseau sans fil et un deuxième point d'accès du deuxième réseau sans fil, le premier réseau ayant des fonctionnalités et/ou des performances supérieures au deuxième réseau sans fil, chaque point d'accès émettant des balises permettant à une station située dans la zone de couverture des dites balises de s'associer au réseau sans fil dudit point d'accès, au moins une station étant située dans la zone de couverture des premier et deuxième réseaux sans fil, la au moins une station étant apte à traiter les balises émises par le premier et le deuxième points d'accès ou étant apte à traiter les balises émises par le deuxième point d'accès et n'étant pas apte à traiter les balises émises par le premier point d'accès, **caractérisé en ce que** le deuxième point d'accès comporte :
- des moyens pour effectuer une réception d'une requête d'association issue de la au moins une station,
- des moyens pour associer la au moins une station avec le deuxième point d'accès,
- des moyens pour effectuer une vérification si la au moins une station est apte à traiter les balises émises par le premier point d'accès,
- des moyens pour échanger de messages avec la au moins une station dans une procédure d'association,
- des moyens pour effectuer une désassociation de la au moins une station avec le deuxième point d'accès si la au moins une station est apte à traiter les balises émises par le premier point d'accès.

## Patentansprüche

1. Verwaltungsverfahren mindestens eines ersten und eines zweiten drahtlosen Netzwerks durch eine Verwaltungsausrüstung, wobei die Verwaltungsausrüstung drahtloser Netzwerke einen ersten Zugangspunkt des ersten drahtlosen Netzwerks und einen zweiten Zugangspunkt des zweiten drahtlosen Netzwerks aufweist, wobei das erste drahtlose Netzwerk höhere Funktionen und/oder Leistungen als das zweite drahtlose Netzwerk hat, wobei jeder Zugangspunkt Beacons sendet, die es einer im Versorgungsbereich der Beacons befindlichen Station erlauben, sich mit dem drahtlosen Netzwerk des Zugangspunkts zu verbinden, wobei mindestens eine Station sich im Versorgungsbereich der ersten und zweiten drahtlosen Netzwerke befindet, wobei die mindestens eine Station fähig ist, die vom ersten und zweiten Zugangspunkt gesendeten Beacons zu verarbeiten, oder fähig ist, die vom zweiten Zugangspunkt gesendeten Beacons zu verarbeiten, und nicht fähig ist, die vom ersten Zugangspunkt gesendeten Beacons zu verarbeiten, **dadurch gekennzeichnet, dass** das Verfahren die vom zweiten Zugangspunkt ausgeführten Schritte aufweist:
- Empfang (307) einer von der mindestens einen Station kommenden Verbindungsanforderung,
- Verbindung (307) der mindestens einen Station mit dem zweiten Zugangspunkt,
- Überprüfung (308), ob die mindestens eine Station fähig ist, die vom ersten Zugangspunkt gesendeten Beacons zu verarbeiten,
- Nachrichtenaustausch mit der mindestens einen Station in einer Verbindungsprozedur,
- Trennung (312) der mindestens einen Station vom zweiten Zugangspunkt, wenn die mindestens eine Station fähig ist, die vom ersten Zugangspunkt gesendeten Beacons zu verarbeiten.

2. Verfahren nach Anspruch 1, **dadurch gekennzeichnet, dass** die Überprüfung ausgeführt wird, indem eine vorbestimmte Anzahl von aufeinanderfolgenden Trennungen der Station vom zweiten Zugangspunkt ausgeführt wird, und, wenn der zweite Zugangspunkt als Antwort für jede Trennung Verbindungsanforderungen der mindestens einen Station mit dem zweiten drahtlosen Netzwerk empfängt, die mindestens eine Station nicht fähig ist, die vom ersten Zugangspunkt gesendeten Beacons zu verarbeiten.

3. Verfahren nach Anspruch 1, **dadurch gekennzeichnet, dass** das Verfahren außerdem die Schritte aufweist:
- Identifizierung, ob die Station über eine Umgebungsbericht-Funktion verfügt, die es der Station ermöglicht, ihre Umgebung zu analysieren und Informationen bezüglich anderer benachbarter Zugangspunkte an den Zugangspunkt zurückzuschicken,
- Empfang, von der mindestens einen Station, einer Nachricht, die Zugangspunktkennungen aufweist, die von der mindestens einen Station erkannt wurden, und dass die Überprüfung ausgehend von den in der empfangenen Nachricht enthaltenen Kennungen ausgeführt wird.

4. Verfahren nach Anspruch 1, **dadurch gekennzeichnet, dass** der zweite Zugangspunkt die Überprüfung ausgehend von einer Tabelle im Speicher ausführt, die mindestens eine Information aufweist, die anzeigt, ob die mindestens eine Station fähig ist, die vom ersten Zugangspunkt gesendeten Beacons zu verarbeiten, wobei die mindestens eine Information bei einer vorhergehenden Verbindung der Station gespeichert wurde.

5. Verfahren nach Anspruch 1, **dadurch gekennzeichnet, dass**, wenn die mindestens eine Station nicht fähig ist, die vom ersten Zugangspunkt gesendeten Beacons zu verarbeiten, das Verfahren außerdem den Schritt aufweist:
- Transfer an den Benutzer der Station einer Einladungsnachricht, eine Software-Aktualisierung auszuführen oder die Station zu wechseln, um den Zugang zum ersten drahtlosen Netzwerk zu ermöglichen.

6. Verfahren nach einem der Ansprüche 1 bis 5, **dadurch gekennzeichnet, dass** das Verfahren außerdem die Schritte aufweist der:
- Verschlechterung der Leistungen der vom zweiten Zugangspunkt gesendeten Signale, wobei die Verschlechterung der Leistungen durch eine Sendeleistungsminderung und/oder durch eine Reduzierung der für die Datenübertragung verwendeten Modulationen und/oder durch eine Reduzierung der Anzahl von für die Datenübertragung verwendeten Antennen realisiert wird,
- Wiederherstellung der Leistungen der vom zweiten Zugangspunkt gesendeten Signale, wenn die mindestens eine Station nicht fähig ist, die vom ersten Zugangspunkt gesendeten Beacons zu verarbeiten.

7. Verfahren nach einem der Ansprüche 1 bis 6, **dadurch gekennzeichnet, dass** das erste drahtlose Netzwerk und das zweite drahtlose Netzwerk Wi-Fi-Netzwerke sind, wobei das erste drahtlose Netzwerk eine auf dem Standard IEEE 802.11 basierende Änderung unterstützt, wobei das zweite drahtlose Netzwerk eine auf dem Standard IEEE 802.11 basierende und ältere Änderung als diejenige des ersten drahtlosen Netzwerks unterstützt.

8. Computerprogrammprodukt, **dadurch gekennzeichnet, dass** es Anweisungen aufweist, die die Ausführung des Verfahrens nach einem der Ansprüche 1 bis 7 durch einen Zugangspunkt einer Verwaltungsausrüstung drahtloser Netzwerke verursachen, wenn die Anweisungen von einem Prozessor der Verwaltungsausrüstung drahtloser Netzwerke ausgeführt werden.

9. Speicherträger, **dadurch gekennzeichnet, dass** er ein Computerprogramm speichert, das Anweisungen aufweist, die die Ausführung des Verfahrens nach einem der Ansprüche 1 bis 7 durch einen Zugangspunkt einer Verwaltungsausrüstung drahtloser Netzwerke verursachen, wenn die Anweisungen von einem Prozessor der Verwaltungsausrüstung drahtloser Netzwerke gelesen und ausgeführt werden.

10. Verwaltungsausrüstung mindestens eines ersten und eines zweiten drahtlosen Netzwerks, wobei die Verwaltungsausrüstung drahtloser Netzwerke einen ersten Zugangspunkt des ersten drahtlosen Netzwerks und einen zweiten Zugangspunkt des zweiten drahtlosen Netzwerks aufweist, wobei das erste drahtlose Netzwerk höhere Funktionen und/oder Leistungen als das zweite drahtlose Netzwerk hat, wobei jeder Zugangspunkt Beacons sendet, die es einer im Versorgungsbereich der Beacons befindlichen Station ermöglichen, sich mit dem drahtlosen Netzwerk des Zugangspunkts zu verbinden, wobei mindestens eine Station sich im Versorgungsbereich der ersten und zweiten drahtlosen Netzwerke befindet, wobei die mindestens eine Station fähig ist, die vom ersten und zweiten Zugangspunkt gesendeten Beacons zu verarbeiten, oder fähig ist, die vom zweiten Zugangspunkt gesendeten Beacons zu verarbeiten, und nicht fähig ist, die vom ersten Zugangspunkt gesendeten Beacons zu verarbeiten, **dadurch gekennzeichnet, dass** der zweite Zugangspunkt aufweist:
- Einrichtungen, um einen Empfang einer von der mindestens einen Station kommenden Verbindungsanforderung auszuführen,
- Einrichtungen, um die mindestens eine Station mit dem zweiten Zugangspunkt zu verbinden,
- Einrichtungen, um eine Überprüfung auszuführen, ob die mindestens eine Station fähig ist, die vom ersten Zugangspunkt gesendeten Beacons zu verarbeiten,
- Einrichtungen, um mit der mindestens einen Station in einer Verbindungsprozedur Nachrichten auszutauschen,
- Einrichtungen, um eine Trennung der mindestens einen Station vom zweiten Zugangspunkt auszuführen, wenn die mindestens eine Station fähig ist, die vom ersten Zugangspunkt gesendeten Beacons zu verarbeiten.

## Claims

1. Method for managing, by management equipment, at least a first and a second wireless network, the equipment managing wireless networks comprising a first access point of the first wireless network and a second access point of the second wireless network, the first wireless network having functionalities and/or performances superior to the second wireless network, each access point sending beacons enabling a station located in the coverage area of said beacons to associate itself with the wireless network of said access point, at least one station being located in the coverage area of the first and second wireless networks, the at least one station being able to process the beacons sent by the first and second access points or being able to process the beacons sent by the second access point and not being able to process the beacon sent by the first access point, **characterised in that** the method comprises the steps, performed by the second access point, of:
- receiving (307), an association request coming from the at least one station,
- associating (307) the at least one station with the second access point,
- checking (308) whether the at least one station is able to process the beacons sent by the first access point,
- exchanging messages with the at least one station in an association procedure,
- deassociating (312) the at least one station with the second access point if the at least one station is able to process the beacons sent by the first access point.

2. Method according to claim 1, **characterised in that** the check is made by implementing a predetermined number of successive disassociations of the station from the second access point and, if the second access point in response receives, for each disassociation, requests for association of said at least one station with the second wireless network, the at least one station is not able to process the beacons sent by the first access point.

3. Method according to claim 1, **characterised in that** the method furthermore comprises the steps of:
- identifying whether the station has an environment report function, enabling the station to analyze its environment and send information back to the access point about other nearby access points,
- receiving, from the at least one station, a message comprising access-point identifiers detected by the at least one station, and **in that** the check is made from identifiers included in the message received.

4. Method according to claim 1, **characterised in that** the second access point implements the check from a table in memory comprising at least one item of information indicating whether the at least one station is able to process the beacons sent by the first access point, the at least one item of information having been stored during a previous association of said station.

5. Method according to claim 1, **characterised in that**, if the at least one station is not able to process the beacons sent by the first access point, the method furthermore comprises the step of:
- transferring, to the user of the station, a message inviting implementing a software update or changing station to allow access to the first wireless network.

6. Method according to one of claims 1 to 5, **characterised in that** the method furthermore comprises the steps of:
- degrading the performances of the signal sent by the second access point, the degradation of the performances being implemented by a drop in transmission power and/or by a reduction in the modulations used for transmitting data and/or by a reduction in the number of antennas used for transmitting data,
- re-establishing the performances of the signals sent by the second access point if the at least one station is not able to process the beacons sent by the first access point.

7. Method according to one of claims 1 to 6, **characterised in that** the first wireless network and the second wireless network are Wi-Fi networks, the first wireless network supporting an amendment based on the IEEE 802.11 standard, the second wireless network supporting an amendment based on the IEEE 802.11 standard older than that of the first wireless network.

8. Computer program product that comprises instructions causing the implementation, by an access point of equipment managing a wireless network, of the method according to any one of claims 1 to 7, when said instructions are implemented by a processor of said wireless-network managing equipment.

9. Storage medium, **characterised in that** it stores a computer program comprising instructions causing the implementation, by an access point of a wireless-network managing equipment, of the method according to any one of claims 1 to 7, when said instructions are read and implemented by a processor of said wireless-network managing equipment.

10. Equipment managing at least one first and one second wireless network, the wireless-network managing equipment comprising a first access point of the first wireless network and a second access point of the second wireless network, the first network having functionalities and/or performances superior to the second wireless network, each access point sending beacons enabling a station located in the coverage area of said beacons to associate with the wireless network of said access point, at least one station being located in the coverage area of the first and second wireless networks, the at least one station being able to process the beacons sent by the first and second access point or being able to process the beacons sent by the second access point and not being able to process the beacons sent by the first access point, **characterised in that** the second access point comprises:
- means for receiving an association request coming from the at least one station,
- means for associating the at least one station with the second access point,
- means for verifying whether the at least one station is able to process the beacons sent by the first access point,
- means for exchanging messages with the at least one station in an association procedure,
- means for deassociating the at least one station with the second access point if the at least one station is able to process the beacons sent by the first access point.
